# EUROPEAN PATENT SPECIFICATION

(11) **EP 1 990 344 B1**
(45) Date of publication and mention of the grant of the patent: **06.03.2013**
(21) Application number: 08251618.8
(22) Date of filing: 06.05.2008
(51) Int. Cl.: C07F 7/08, C08G 77/60

(54) **Polycyclic hydrocarbon group-containing organosilicon compound having hydrogen atoms bonded to silicon atoms, and method of producing same**
Polycyclische kohlenwasserstoffgruppenhaltige siliciumorganische Verbindung mit an Siliciumatomen gebundenen Wasserstoffatomen und Herstellungsverfahren dafür
Composé organosilicié contenant un groupe d'hydrocarbure polycyclique doté atomes d'hydrogène liés à des atomes de silice, et son procédé de fabrication

(30) Priority: 07.05.2007 JP 2007122486
(43) Date of publication of application: 12.11.2008
(73) Proprietor: Shin-Etsu Chemical Co., Ltd., Tokyo (JP)
(72) Inventor: Tabei, Eiichi, Annaka-shi, Gunma-ken (JP)
(74) Representative: Hallybone, Huw George

(56) References cited:
- JP-A- 11 199 677
- TSUMURA M ET AL: "Crosslinked polycarbosilanes. Synthesis and properties" POLYMER JOURNAL, vol. 32, no. 7, 2000, pages 567-573, XP009105719
- ZHOU D ET AL: "Tris(pentafluorophenyl)borane as a superior catalyst in the synthesis of optically active SiO-containing polymers" MACROMOLECULES, vol. 38, no. 16, 9 August 2005 (2005-08-09), pages 6902-6908, XP009105672
- MURTHY M V R K ET AL: "Synthesis of silene spaced divinyl naphthalene copolymers" ARKIVOC, [Online] no. 8, 2001, pages 104-110, XP007905645
- CAZACU M: "Synthesis of alternating silnaphthalene-siloxane oligomers by hydrosilylation" REVUE ROUMAINE DE CHIMIE, vol. 45, no. 5, 2001, pages 469-473, XP009105659 ISSN: 0035-3930
- GVERDTSITELI I M ET AL: "Synthesis and study of some unsaturated organosilico- germanium compounds based on 1,4- bis(dimethylsilyl)-1,4-dihydronaphthalene and 9,10-bis(dimethylsilyl)-9,10- dihydroanthracene" SOOBSHCHENIYA AKADEMII NAUK GRUZINSKOI SSR - BULLETIN OF THE ACADEMY OF SCIENCES OF THE GEORGIAN SSR, vol. 77, no. 1, 1975, pages 85-88, XP009105656 ISSN: 0002-3167
- COUPAR P I ET AL: "Synthesis and characterisation of silanol-functionalised dendrimers" JOURNAL OF THE CHEMICAL SOCIETY, DALTON TRANSACTIONS, 1999, pages 2183-2188, XP007905648

## Description

### BACKGROUND OF THE INVENTION

### 1. Field of the Invention

The present invention relates to a polycyclic hydrocarbon group-containing organosilicon compound having hydrogen atoms bonded to silicon atoms (hereafter also referred to as "SiH" groups), which is useful as a raw material for curable silicone materials, encapsulating materials for optical devices such as optical elements, encapsulating materials for other electronic devices such as semiconductor elements, and electrically insulating coating materials. The invention also relates to a method of producing the polycyclic hydrocarbon group-containing organosilicon compound.

### 2. Description of the Prior Art

In recent years, the output of blue light emitting diodes (LED) and white LEDs has increased, and they are now starting to be used for mobile telephone flashes, backlights for liquid crystal displays, and for general illumination. However, this increase in the LED output has lead to increases in the quantity of ultraviolet light emitted and the quantity of heat generated, meaning the materials used for constructing the devices require better levels of light resistance, heat resistance and crack resistance.

Coating and encapsulating materials for LEDs require favorable transparency, and although conventional epoxy resins exhibit a high degree of hardness and superior crack resistance, they are known to undergo discoloration when exposed to ultraviolet light or heat, which leads to a deterioration in the LED output.

The use of silicone resins has been investigated as one potential solution to the above discoloration problem. Soft silicone resins generally exhibit excellent heat resistance, but they suffer from poor workability and are prone to dirt and dust adhesion. Furthermore, although hard silicones provide excellent workability and handling properties, they tend to suffer from inferior crack resistance.

Tsumara M. et al, Polymer Journal, vol. 32, No. 7, pp 567-573 (2000) discloses crosslinked polycarbosibares synthesized by hydrosilylation reaction between multi-functional vinylsilanes and hydrosilanes.

JP 11 199677 A discloses a composition capable of providing a cured product excellent in dynamic characteristics by including a compound having SIH group, a silicon compound having an alkeryl group and a hydrosilylating catalyst as essential components.

### SUMMARY OF THE INVENTION

The present invention takes the above problems associated with the conventional technology into consideration, and has an object of providing a polycyclic hydrocarbon group-containing organosilicon compound having SiH groups, which yields a cured product that has a high degree of hardness and excellent transparency, crack resistance and heat resistance, and which is useful as a raw material for curable silicone materials, encapsulating materials for optical devices such as optical elements, encapsulating materials for other electronic devices such as semiconductor elements, and electrically insulating coating materials. Another object of the present invention is to provide a method of producing the polycyclic hydrocarbon group-containing organosilicon compound.

As a result of intensive investigation aimed at achieving the above objects, the inventors of the present invention were able to complete the present invention. In other words, a first aspect of the present invention provides a polycyclic hydrocarbon group-containing organosilicon compound, which comprises two hydrogen atoms bonded to silicon atoms within each molecule, and is an addition reaction product of:
(a) an organosilicon compound having two hydrogen atoms bonded to silicon atoms within each molecule, and
(b) a polycyclic hydrocarbon compound having two hydrosilylation reactive carbon-carbon double bonds within each molecule, as defined in claim 1.

A second aspect of the present invention provides a method of producing the above polycyclic hydrocarbon group-containing organosilicon compound, the method comprising conducting an addition reaction between the above component (a) and the above component (b) in the presence of a hydrosilylation reaction catalyst.

A cured product obtained from a composition containing the polycyclic hydrocarbon group-containing organosilicon compound having SiH groups according to the present invention has a high degree of hardness and excellent transparency, crack resistance and heat resistance. Accordingly, a curable composition that uses this compound can be used favorably within applications that involve protecting, encapsulating or bonding light emitting diode elements. Furthermore, the composition can also be used as a lens material, an encapsulating material for optical devices such as optical elements, a variety of optical materials such as display materials, an encapsulating material for other electronic devices such as semiconductor elements, and a coating material such as an electrically insulating coating material.

### DETAILED DESCRIPTION OF THE PREFERRED EMBODIMENTS

A more detailed description of the present invention is provided below. In this description, "Me" represents a methyl group and "Vi" represents a vinyl group.

### [Polycyclic Hydrocarbon Group-containing Organosilicon Compound having SiH Groups]

The polycyclic hydrocarbon group-containing organosilicon compound having two SiH groups within each molecule according to the present invention is an addition reaction product of a component (a) described below, which is an organosilicon compound having two hydrogen atoms bonded to silicon atoms within each molecule, and a component (b) described below, which is a polycyclic hydrocarbon compound having two hydrosilylation reactive carbon-carbon double bonds within each molecule.

### <Component (a)>

The component (a) is an organosilicon compound having two hydrogen atoms bonded to silicon atoms within each molecule. The component (a) may use either a single compound or a combination of two or more different compounds.

Component (a) is an organosilicon compound represented by a general formula (1) shown below. 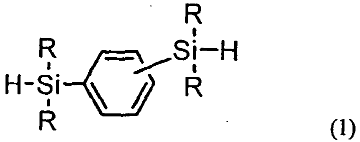 (wherein, R represents an unsubstituted monovalent hydrocarbon group of 1 to 3 carbon atoms)

Examples of R in the above general formula (1) include alkyl groups of 1 to 3 carbon atoms, such as a methyl group, ethyl group, propyl group, isopropyl group, cycloalkyl groups of 3 carbon atoms In terms of ease of industrial production and availability, organosilicon compounds of the above general formula (1) in which all of the R groups are methyl groups are preferred.

Specific examples of organosilicon compounds represented by the above general formula (1) include the silphenylene compounds 1,4-bis(dimethylsilyl)benzene represented by HMe₂Si-p-C₆H₄-SiMe₂H, 1,3-bis(dimethylsilyl)benzene represented by HMe₂Si-m-C₆H₄-SiMe₂H, and 1,2-bis(dimethylsilyl)benzene represented by HMe₂Si-o-C₆H₄-SiMe₂H.

### <Component (b)>

The component (b) is a polycyclic hydrocarbon compound having two hydrosilylation reactive carbon-carbon double bonds within each molecule.

The component (b) may use either a single compound or a combination of two or more different compounds.

Component (b) is a polycyclic hydrocarbon compound represented by a general formula (x) shown below. 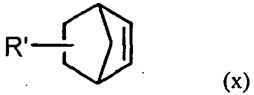 (wherein, R' represents an unsubstituted alkenyl group of 2 to 4 carbon atoms).

In the above general formula (x), examples of the alkenyl group represented by R' include include a vinyl group, allyl groups and propenyl group, and of these a vinyl group is preferred.

In a particularly preferred embodiment of the present invention, specific examples of the component (b) include 5-vinylbicyclo[2.2.1]hept-2-ene, represented by a structural formula (y) shown below, 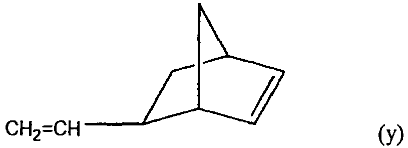 6-vinylbicyclo[2.2.1]hept-2-ene, represented by a structural formula (z) shown below, 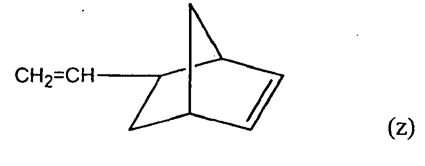 or a combination of these two compounds (hereafter, in those cases where there is no need to differentiate between these three options, the generic term "vinylnorbornene" may be used).

The arrangement of the vinyl group in the above vinylnorbornenes may adopt either a cis arrangement (the exo form) or a trans arrangement (the endo form), or alternatively, because this variation in the vinyl group arrangement does not cause any significant changes in the reactivity of the component (b), a combination of both isomers may also be used.

### <Example of Polycyclic Hydrocarbon Group-containing Organosilicon Compound having SiH groups>

A specific example of a preferred polycyclic hydrocarbon group-containing organosilicon compound having SiH groups according to the present invention is shown below, although the present invention is not limited to this example. 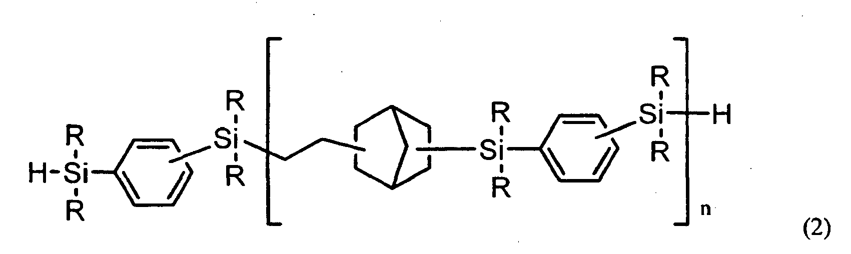 (wherein, R is as defined above, and n represents an integer from 1 to 50, preferably from 1 to 30, and even more preferably from 1 to 20)

Because this compound includes both a polycyclic hydrocarbon group and a phenylene group, a cured product obtained from a composition that contains this compound has a particularly high degree of hardness, and particularly superior levels of transparency, crack resistance and heat resistance.

### <Preparation of Polycyclic Hydrocarbon Group-containing Organosilicon Compound having SiH groups>

The polycyclic hydrocarbon group-containing organosilicon compound having SiH groups can be produced by conducting an addition reaction, in the presence of a hydrosilylation reaction catalyst, of an excess of the above component (a) equivalent to more than 1 mol but not more than 10 mols, and preferably more than 1 mol but not more than 5 mols, per 1 mol of the above component (b). Because a molar excess of the component (a) is reacted with the component (b) during the preparation, the produced polycyclic hydrocarbon group-containing organosilicon compound having SiH groups according to the present invention contains two SiH groups derived from the structure of the component (a) within each molecule.

There are no particular restrictions on the hydrosilylation reaction catalyst, and any of the conventional catalysts may be used. Examples include platinum-based catalysts such as platinic chloride, chloroplatinic acid, reaction products of chloroplatinic acid and monovalent alcohols, complexes of chloroplatinic acid and olefins, platinum bisacetoacetate, metallic platinum supported on carbon powder, and platinum black; as well as other platinum group metal-based catalysts such as palladium-based catalysts and rhodium-based catalysts. Furthermore, there are no particular restrictions on the addition reaction conditions or the solvent used, and normal practices may be followed. The hydrosilylation reaction catalyst may use either a single material or a combination of two or more different materials.

In a specific example, a polycyclic hydrocarbon group-containing organosilicon compound represented by the above general formula (2) can be produced by conducting an addition reaction, in the presence of a hydrosilylation reaction catalyst, of an excess of an organosilicon compound represented by the above general formula (1) equivalent to more than 1 mol but not more than 10 mols, and preferably more than 1 mol but not more than 5 mols, per 1 mol of 5-vinylbicyclo[2.2.1]hept-2-ene, 6-vinylbicyclo[2.2.1]hept-2-ene, or a combination of these two compounds. This reaction may be conducted in the absence of a solvent, or may be conducted in the presence of a solvent such as toluene. The reaction temperature is typically within a range from 50 to 150°C, and is preferably from 80 to 120°C. The reaction time is typically within a range from 10 to 30 hours. The quantity added of the hydrosilylation reaction catalyst need only be sufficient to accelerate the above addition reaction, and a typical quantity, calculated as the mass of the platinum group metal relative to the combined mass of the raw material compounds, is within a range from 1 ppm (on a mass basis, this also applies below) to 1% by mass, and is preferably within a range from 10 to 500 ppm. Provided the quantity of the catalyst is within this range, the addition reaction can be accelerated satisfactorily, and the addition reaction rate can be easily increased by increasing the quantity of the catalyst, which is desirable from an economic perspective.

### [Applications]

The polycyclic hydrocarbon group-containing organosilicon compound having SiH groups according to the present invention is useful as a raw material for curable silicone materials, encapsulating materials for optical devices such as optical elements, encapsulating materials for other electronic devices such as semiconductor elements, and electrically insulating coating materials. Examples of optical devices include optical elements such as LEDs, semiconductor lasers, photodiodes, phototransistors, solar cells and CCDs; and optical components such as lenses. Examples of electronic devices include semiconductor elements such as diodes, transistors, ICs, CPUs and memory elements.

### EXAMPLES

Specifics of the present invention are described below using a series of examples, although the present invention is in no way limited by the examples presented below.

### [Example 1]

A 500 ml four-neck flask fitted with a stirrer, a cooling tube, a dropping funnel and a thermometer was charged with 194 g (1 mol) of 1,4-bis(dimethylsilyl)benzene and 100 g of toluene as a solvent, and the flask was then heated to 85°C using an oil bath. 0.1 g of a carbon powder supporting 5% by mass of platinum metal was added to the flask, and with the mixture undergoing constant stirring, 60 g (0.5 mols) of a vinylnorbornene (product name: V0062, manufactured by Tokyo Kasei Kogyo Co., Ltd., a substantially equimolar isomeric mixture of 5-vinylbicyclo[2.2.1]hept-2-ene and 6-vinylbicyclo[2.2.1]hept-2-ene) was added dropwise over a period of 60 minutes. Following completion of the dropwise addition, the reaction mixture was stirred for a further 24 hours under heating at 120°C, and was then cooled to room temperature. Subsequently, the carbon powder-supported platinum metal was removed by filtration, and the toluene and unreacted raw materials were removed by evaporation under reduced pressure, yielding 206 g of a colorless and transparent oily reaction product (viscosity at 25°C: 300 Pa·s).

The results of FT-IR, NMR and GPC analyses of the reaction product confirmed that the product was a mixture represented by the structural formula shown below (n = 1: 38 mol%, n = 2: 20 mol%, n = 3: 16 mol%, n = 4 to 10: a total of 26 mol%). Furthermore, the refractive index of the reaction product was 1.545.

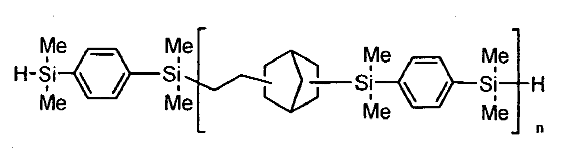

### [Reference Example 1]

A composition was prepared by mixing uniformly together:
(A) 77 parts by mass of the reaction product obtained in the example 1,
(B) 15 parts by mass of (ViMeSiO)₄,
(C) a platinum-vinylsiloxane complex as a curing catalyst, in sufficient quantity to provide 20 ppm of platinum metal atoms relative to the total mass of the composition,
(D) 0.03 parts by mass of 1-ethynylcyclohexanol, and (as another component) 8 parts by mass of 1-(2-trimethoxysilylethyl)-3-(3-glycidoxypropyl)-1,3,5,7-tetramethylcyclotetrasiloxane.

This composition was poured into a mold formed from glass plates to generate a thickness of 2 mm, and was then heated at 150°C for 5 hours, thus yielding a cured product.

### [Reference Example 2]

A composition was prepared by mixing uniformly together:
(A) 75 parts by mass of the reaction product obtained in the example 1,
(B) 17 parts by mass of (ViMeSiO)₄,
(C) a platinum-vinylsiloxane complex as a curing catalyst, in sufficient quantity to provide 20 ppm of platinum metal atoms relative to the total mass of the composition,
(D) 0.03 parts by mass of 1-ethynylcyclohexanol, and (as another component) 8 parts by mass of 1-(2-trimethoxysilylethyl)-3-(3-glycidoxypropyl)-1,3,5,7-tetramethylcyclotetrasiloxane.

This composition was poured into a mold formed from glass plates to generate a thickness of 2 mm, and was then heated at 150°C for 5 hours, thus yielding a cured product.

### [Performance Evaluation Methods]

The performance of the cured products obtained in each of the above reference examples was evaluated using the following techniques.

### <External Appearance>

The external appearance of each cured product was inspected visually. The results are shown in Table 1.

### <Hardness>

The hardness (Shore D) of each cured product was measured in accordance with ASTM D 2240. The results of the measurements are shown in Table 1.

### <Crack Resistance>

Each of the resin compositions obtained in the reference examples was poured into a PPA cup containing an LED chip that had been wire bonded with gold wire, and was subsequently cured by heating at 100°C for 1 hour and then at 150°C for a further 5 hours. Using a thermal shock tester, the resulting structure was subjected to 100 cycles of a thermal shock test, with each cycle consisting of 30 minutes at -40°C and then 30 minutes at 100°C, and the structure was then inspected for cracking. The results are shown in Table 1, using the evaluation criteria shown below.
A: No anomalies
B: Micro-cracks around the wiring portion
C: Cracking around the wiring portion and the chip portion
D: Cracks exist throughout the entire encapsulating resin, or the resin may suffer detachment

### <Heat Resistance>

The light transmittance at 400 nm of the 2 mm thick cured product prepared in each of the reference examples was measured, the cured product was then left to stand for 240 hours at 150°C, and the light transmittance at 400 nm was then re-measured. The measurement results are shown in Table 1.

**[Table 1]**

| | Reference Example | |
|---|---|---|
| Item | 1 | 2 |
| External appearance | Colorless, transparent | Colorless, transparent |
| Hardness (Shore D) | 70 | 71 |
| Crack resistance | A | A |
| Initial transmittance (%) | 88.3 | 88.7 |
| Transmittance after 240 hours at 150°C (%) | 85.2 | 84.1 |

### [Evaluation]

The cured products obtained from the compositions containing a polycyclic hydrocarbon group-containing organosilicon compound of the example 1 were colorless and transparent, exhibited a high degree of hardness, and also offered superior crack resistance and light transmittance. Furthermore, the cured products also exhibited excellent resistance to heat and coloration, and are particularly suited to use as all manner of optical materials and encapsulating materials.

## Claims

1. A polycyclic hydrocarbon group-containing organosilicon compound, which comprises two hydrogen atoms bonded to silicon atoms within each molecule, and is an addition reaction product of:
(a) an organosilicon compound having two hydrogen atoms bonded to silicon atoms within each molecule, and
(b) a polycyclic hydrocarbon compound having two hydrosilylation reactive carbon-carbon double bonds within each molecule,
wherein the component (a) is an organosilicon compound represented by a general formula (1) shown below: 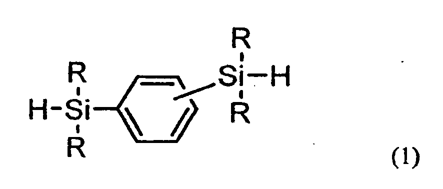 (wherein, R represents an unsubstituted monovalent hydrocarbon group of 1 to 3 carbon atoms), and
wherein the component (b) is a polycyclic hydrocarbon compound represented by a general formula (x) shown below: 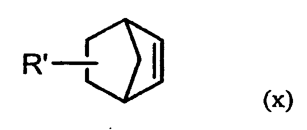 (wherein, R' represents an unsubstituted alkenyl group of 2 to 4 carbon atoms).

2. The polycyclic hydrocarbon group-containing organosilicon compound according to claim 1, wherein R' represents a vinyl group.

3. The polycyclic hydrocarbon group-containing organosilicon compound according to claim 1 or claim 2, wherein the component (b) is 5-vinylbicyclo[2.2.1]hept-2-ene, 6-vinylbicyclo[2.2.1]hept-2-ene, or a combination thereof.

4. The polycyclic hydrocarbon group-containing organosilicon compound according to claim 1 or claim 2, represented by a general formula (2) shown below: 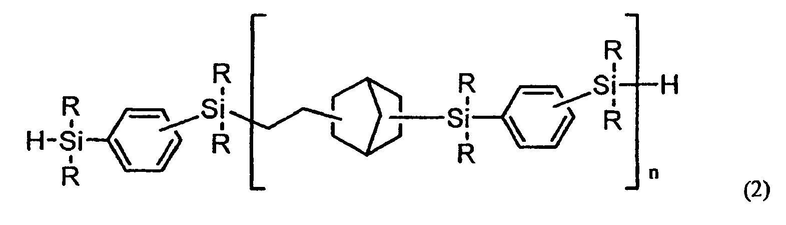 (wherein, R is as defined above, and n represents an integer from 1 to 50).

5. The polycyclic hydrocarbon group-containing organosilicon compound according to any of claims 1 to 4, wherein R represents a methyl group.

6. A method of producing the polycyclic hydrocarbon group-containing organosilicon compound defined in claim 1, the method comprising;
conducting an addition reaction between:
(a) an organosilicon compound having two hydrogen atoms bonded to silicon atoms within each molecule, and
(b) a polycyclic hydrocarbon compound having two hydrosilylation reactive carbon-carbon double bonds within each molecule,
in the presence of a hydrosilylation reaction catalyst,
wherein the component (a) is an organosilicon compound represented by a general formula (1) shown below: 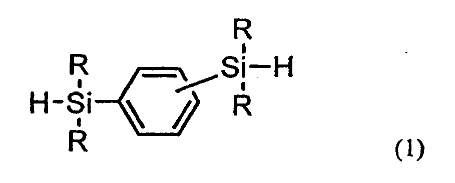 (wherein, R represents an unsubstituted monovalent hydrocarbon group of 1 to 3 carbon atoms), and
wherein the component (b) is a polycyclic hydrocarbon compound represented by a general formula (x) shown below: 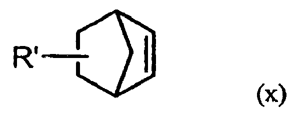 (wherein, R' represents an unsubstituted alkenyl group of 2 to 4 carbon atoms).

7. The method according to claim 6, wherein R' represents a vinyl group.

8. The method according to claim 6 or 7, wherein the component (b) is 5-vinylbicyclo[2.2.1]hept-2-ene, 6-vinylbicyclo[2.2.1]hept-2-ene, or a combination thereof.

9. The method according to claim 6 or 7, wherein the polycyclic hydrocarbon group-containing organosilicon compound is represented by a general formula (2) shown below: 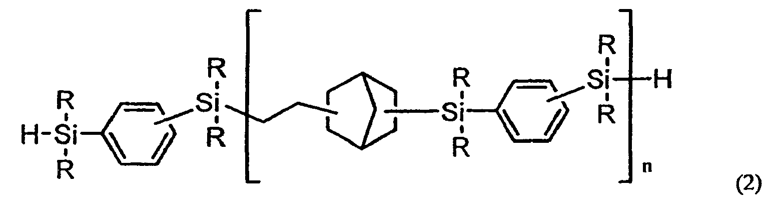 (wherein, R is as defined above, and n represents an integer from 1 to 50).

10. The method according to any of claims 6 to 9, wherein R represents a methyl group.

## Patentansprüche

1. Mindestens eine polycyclische Kohlenwasserstoffgruppe enthaltende Organosiliciumverbindung, die in jedem Molekül zwei an Siliciumatome gebundene Wasserstoffatomen aufweist und ein Additionsreaktionsprodukt von:
(a) einer Organosiliciumverbindung mit zwei an Siliciumatome gebundenen Wasserstoffatomen in jedem Molekül und
(b) einer polycyclischen Kohlenwasserstoffverbindung mit zwei hydrosilylierungsaktiven Kohlenstoff-Kohlenstoff-Doppelbindungen in jedem Molekül ist, wobei es sich bei der Komponente (a) um eine Organosiliciumverbindung handelt, die durch die nachstehend gezeigte allgemeine Formel (1) wiedergegeben wird: 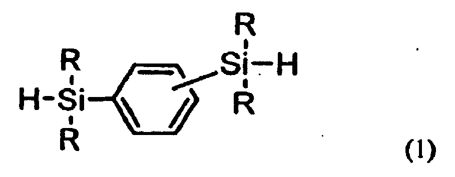 (worin R für eine unsubstituierte einwertige Kohlenwasserstoffgruppe mit 1 bis 3 Kohlenstoffatomen steht), und
wobei es sich bei der Komponente (b) um eine polycyclische Kohlenwasserstoffverbindung handelt, die durch die nachstehend gezeigte allgemeine Formel (x) wiedergegeben wird: 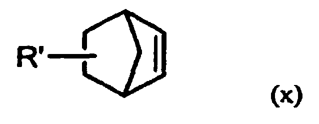 (worin R' für eine unsubstituierte Alkenylgruppe mit 2 bis 4 Kohlenstoffatomen steht).

2. Mindestens eine polycyclische Kohlenwasserstoffgruppe enthaltende Organosiliciumverbindung nach Anspruch 1, wobei R' für eine Vinylgruppe steht.

3. Mindestens eine polycyclische Kohlenwasserstoffgruppe enthaltende Organosiliciumverbindung nach Anspruch 1 oder Anspruch 2, wobei es sich bei der Komponente (b) um 5-Vinylbicyclo[2.2.1]hept-2-en, 6-Vinylbicyclo[2.2.1]hept-2-en oder eine Kombination davon handelt.

4. Mindestens eine polycyclische Kohlenwasserstoffgruppe enthaltende Organosiliciumverbindung nach Anspruch 1 oder Anspruch 2, wiedergegeben durch die nachstehend gezeigte allgemeine Formel (2): 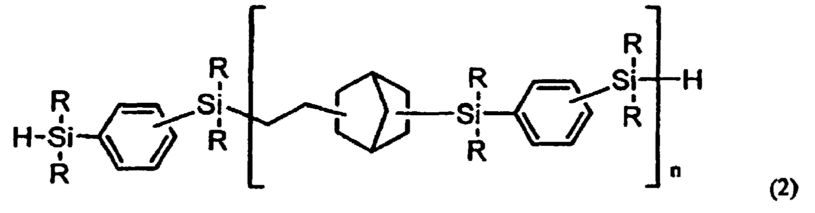 (worin R die oben angegebene Bedeutung besitzt und n für eine ganze Zahl von 1 bis 50 steht).

5. Mindestens eine polycyclische Kohlenwasserstoffgruppe enthaltende Organosiliciumverbindung nach einem der Ansprüche 1 bis 4, wobei R für eine Methylgruppe steht.

6. Verfahren zur Herstellung der mindestens eine polycyclische Kohlenwasserstoffgruppe enthaltenden Organosiliciumverbindung gemäß Anspruch 1, bei dem man:
in Gegenwart eines Hydrosilylierungsreaktionskatalysators eine Additionsreaktion zwischen:
(a) einer Organosiliciumverbindung mit zwei an Siliciumatome gebundenen Wasserstoffatomen in jedem Molekül und
(b) einer polycyclischen Kohlenwasserstoffverbindung mit zwei hydrosilylierungsreaktiven Kohlenstoff-Kohlenstoff-Doppelbindungen in jedem Molekül durchführt,
wobei es sich bei der Komponente (a) um eine Organosiliciumverbindung handelt, die durch die nachstehend gezeigte allgemeine Formel (1) wiedergegeben wird: 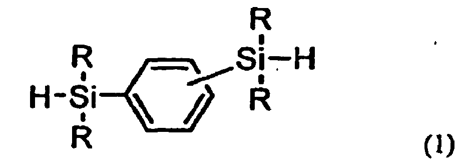 (worin R für eine unsubstituierte einwertige Kohlenwasserstoffgruppe mit 1 bis 3 Kohlenstoffatomen steht), und
wobei es sich bei der Komponente (b) um eine polycyclische Kohlenwasserstoffverbindung handelt, die durch die nachstehend gezeigte allgemeine Formel (x) wiedergegeben wird: 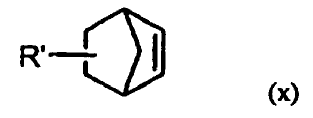
(worin R' für eine unsubstituierte Alkenylgruppe mit 2 bis 4 Kohlenstoffatomen steht).

7. Verfahren nach Anspruch 6, bei dem R' für eine Vinylgruppe steht.

8. Verfahren nach Anspruch 6 oder 7, bei dem es sich bei der Komponente (b) um 5-Vinylbicyclo-[2.2.1]hept-2-en, 6-Vinylbicyclo[2.2.1]hept-2-en oder eine Kombination davon handelt.

9. Verfahren nach Anspruch 6 oder 7, bei dem die mindestens eine polycyclische Kohlenwasserstoffgruppe enthaltende Organosiliciumverbindung durch die nachstehend gezeigte allgemeine Formel (2) wiedergegeben wird: 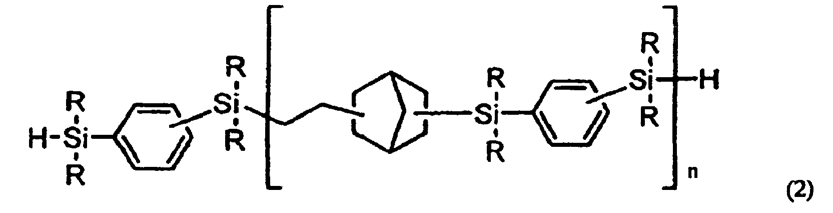 (worin R die oben angegebene Bedeutung besitzt und n für eine ganze Zahl von 1 bis 50 steht).

10. Verfahren nach einem der Ansprüche 6 bis 9, bei dem R für eine Methylgruppe steht.

## Revendications

1. Composé organosilicium contenant un groupe hydrocarboné polycyclique, qui comprend deux atomes d'hydrogène liés à des atomes de silicium au sein de chaque molécule, et est un produit de réaction d'addition :
(a) d'un composé organosilicium comportant deux atomes d'hydrogène liés à des atomes de silicium au sein de chaque molécule, et
(b) d'un composé hydrocarboné polycyclique comportant deux doubles liaisons carbone-carbone susceptibles de prendre part à une réaction d'hydrosilylation au sein de chaque molécule,
dans lequel le composant (a) est un composé organosilicium représenté par une formule générale (1) indiquée ci-dessous : 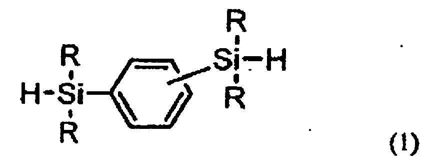 (dans laquelle R représente un groupe hydrocarboné monovalent non substitué de 1 à 3 atomes de carbone), et
dans lequel le composant (b) est un composé hydrocarboné polycyclique représenté par une formule générale (x) indiquée ci-dessous : 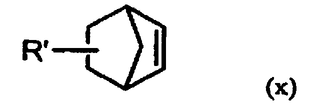 (dans laquelle R' représente un groupe alcényle non substitué de 2 à 4 atomes de carbone).

2. Composé organosilicium contenant un groupe hydrocarboné polycyclique selon la revendication 1, dans lequel R' représente un groupe vinyle.

3. Composé organosilicium contenant un groupe hydrocarboné polycyclique selon la revendication 1 ou la revendication 2, dans lequel le composant (b) est le 5-vinylbicyclo[2.2.1]hept-2-ène, le 6-vinylbicyclo-[2.2.1]hept-2-ène, ou une combinaison de ceux-ci.

4. Composé organosilicium contenant un groupe hydrocarboné polycyclique selon la revendication 1 ou la revendication 2, représenté par une formule générale (2) indiquée ci-dessous : 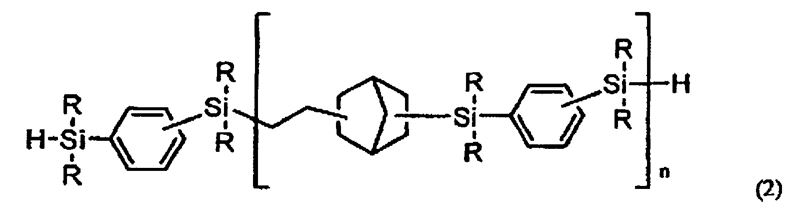 (dans laquelle R est tel que défini ci-dessus, et n représente un nombre entier de 1 à 50).

5. Composé organosilicium contenant un groupe hydrocarboné polycyclique selon l'une quelconque des revendications 1 à 4, dans lequel R représente un groupe méthyle.

6. Procédé de production du composé organosilicium contenant un groupe hydrocarboné polycyclique selon la revendication 1, le procédé comprenant les étapes consistant à :
effectuer une réaction d'addition entre :
(a) un composé organosilicium comportant deux atomes d'hydrogène liés à des atomes de silicium au sein de chaque molécule, et
(b) un composé hydrocarboné polycyclique comportant deux doubles liaisons carbone-carbone susceptibles de prendre part à une réaction d'hydrosilylation au sein de chaque molécule,
en présence d'un catalyseur de réaction d'hydrosilylation,
dans lequel le composant (a) est un composé organosilicium représenté par une formule générale (1) indiquée ci-dessous : 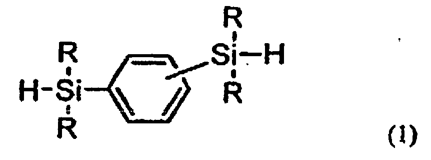 (dans laquelle R représente un groupe hydrocarboné monovalent non substitué de 1 à 3 atomes de carbone), et
dans lequel le composant (b) est un composé hydrocarboné polycyclique représenté par une formule générale (x) indiquée ci-dessous : 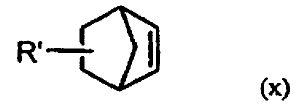
(dans laquelle R' représente un groupe alcényle non substitué de 2 à 4 atomes de carbone).

7. Procédé selon la revendication 6, dans lequel R' représente un groupe vinyle.

8. Procédé selon la revendication 6 ou 7, dans lequel le composant (b) est le 5-vinylbicyclo[2.2.1]hept-2-ène, le 6-vinylbicyclo[2.2.1]hept-2-ène, ou une combinaison de ceux-ci.

9. Procédé selon la revendication 6 ou 7, dans lequel le composé organosilicium contenant un groupe hydrocarboné polycyclique est représenté par une formule générale (2) indiquée ci-dessous : 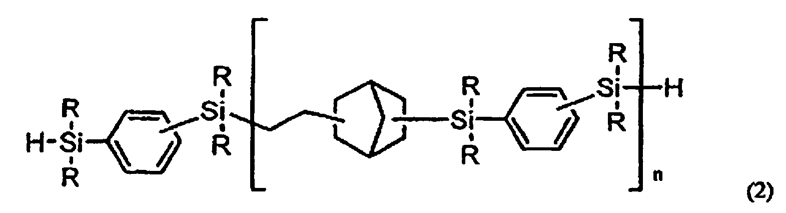 (dans laquelle R est tel que défini ci-dessus et n représente un nombre entier de 1 à 50).

10. Procédé selon l'une quelconque des revendications 6 à 9, dans lequel R représente un groupe méthyle.
